Europäisches Patentamt

European Patent Office

Office européen des brevets

(19)

(11) Numéro de publication: **0 166 653 B1**

(12) # FASCICULE DE BREVET EUROPEEN

(45) Date de publication du fascicule du brevet:
**06.09.89**

(51) Int. Cl.⁴: **A 01 F 25/20, A 01 D 90/10**

(21) Numéro de dépôt: **85401192.1**

(22) Date de dépôt: **14.06.85**

(54) **Désileuse mélangeuse et distributrice.**

(30) Priorité: **15.06.84 FR 8409614**
**15.06.84 FR 8409615**

(43) Date de publication de la demande:
**02.01.86 Bulletin 86/1**

(45) Mention de la délivrance du brevet:
**06.09.89 Bulletin 89/36**

(84) Etats contractants désignés:
**AT BE CH DE FR GB IT LI LU NL SE**

(56) Documents cités:
**EP-A- 0 034 742**
**DE-A- 2 652 310**
**DE-A- 2 847 896**
**DE-A- 3 126 447**
**FR-A- 2 331 970**
**FR-A- 2 531 602**

(73) Titulaire: **ETABLISSEMENTS LUCAS G, B.P. 9 La Verrie,
F-85130 La Gaubretière (FR)**

(72) Inventeur: **Lucas, Gérard, 9 rue du Moulin, F-85130 La
Verrie (FR)**

(74) Mandataire: **Phélip, Bruno et al, c/o Cabinet Harlé &
Phélip 21, rue de La Rochefoucauld, F-75009 Paris (FR)**

## Description

La présente invention concerne un perfectionnement aux désileuses distributrices de produits alimentaires pour le bétail.

Les désileuses distributrices sont couramment utilisées pour la manutention des aliments du bétail; elles permettent une mécanisation totale de l'alimentation du bétail et visent plus particulièrement à réduire les frais de main d'œuvre.

Ces désileuses distributrices sont essentiellement constituées d'une benne portée ou trainée par le tracteur, qui est chargée en fourrage ou autres produits ensilés, au moyen d'une griffe manœuvrée à partir d'un bras articulé sur la benne. La griffe et le bras sont actionnés à partir du tracteur, au moyen de vérins, pour prélever directement le produit dans le silo et le pousser par paquets dans la benne.

La distribution des produits s'effectue latéralement sur le côté de la benne, alors que le chargement est frontal. Cette distribution est généralement réalisée au moyen d'un tapis transporteur sans fin, disposé transversalement. Ce tapis se déplace à une vitesse très faible, entrainant le produit vers une ou plusieurs roues couramment appelées «hérissons»; ces hérissons distribuent régulièrement le produit par une trappe latérale ouverte au-dessus de l'auge à bétail, comme décrit dans le brevet FR-A-2 450 049 de la demanderesse.

Des difficultés sont apparues avec l'emploi des mélanges de produits, dans l'alimentation du bétail. La désileuse prélève dans des silos différents les produits prévus, parfois ce sont des compléments qui sont versés directement dans la benne. Ces différents produits sont distribués de la même façon dans l'auge mais on remarque que le bétail ne se nourrit pas de façon équilibrée car il parvient à séparer les produits mélangés.

Ce type de désileuse, équipée de son propre dispositif de chargement ne permet pas de réaliser un mélange intime des produits et ensuite de distribuer convenablement ce mélange.

On connait des machines qui permettent à la fois le désilage, le mélange et la distribution de produits alimentaires. Un exemple de réalisation est donné dans le document FR-A-2 331 970 concernant une remorque en forme de benne, dans laquelle on trouve un tapis mélangeur sans fin; ce tapis alimente une vis d'évacuation qui assure la distribution latérale des produits; la benne est remplie au moyen d'un dispositif préleveur à bras articulés qui fait pénétrer les produits à l'extrémité arrière de la benne.

Un autre exemple est décrit dans le document FR-A-2 531 602 concernant une machine mélangeuse distributrice comportant une benne ouverte sur l'arrière ou seulement sur le dessus. Comme dans le brevet précédent, cette benne renferme un tapis mélangeur sans fin, disposé longitudinalement par rapport au sens d'avancement de la machine, et elle comporte d'une part, un dispositif de distribution latérale des produits et, d'autre part, un dispositif de chargement des produits dans la benne.

Ces deux types de machines présentent l'inconvénient d'être relativement complexes du fait de la présence de plusieurs organes mobiles: un organe mélangeur et un organe distributeur.

L'invention propose une désileuse distributrice simplifiée permettant à la fois la réalisation d'un mélange intime des produits et leur distribution; ce mélange est effectué en permanence et/ou à volonté, dans la benne pendant le transport et aussi pendant le déchargement.

Selon l'invention, la benne de la désileuse est chargée frontalement, au moyen d'une griffe montée sur un bras de manœuvre, elle comporte un tapis disposé transversalement par rapport au sens d'avancement, le tapis est du type à chaines sans fin, entrainant des barrettes et il est guidé en haut et en bas de la benne, à l'extérieur de la section frontale de chargement de ladite benne, pour permettre l'introduction de la griffe et des produits à l'intérieur et vers le fond de ladite benne.

Selon un premier mode de réalisation, la désileuse mélangeuse et distributrice est du type munie d'une griffe de chargement faisant office de porte pour obturer l'ouverture frontale de chargement de la benne, pendant l'opération de mélange et de distribution; dans ce premier mode de réalisation, le tapis mélangeur-distributeur circule sur des galets dont les axes sont parallèles au sens d'introduction des produits dans la benne; l'espacement des barrettes du tapis est voisin de l'espacement entre les chaines dudit tapis.

Selon une autre disposition de ce premier mode de réalisation, une traverse est disposée à la partie supérieure frontale de la benne pour réaliser à la fois un guidage du tapis et un renfort entre les côtés de la benne.

Selon un second mode de réalisation, la désileuse mélangeuse et distributrice est du type basculante avec deux positions:

– une position normale de transport et de distribution,

– une position normale de chargement, obtenue par pivotement complet de la désileuse, de 90° par rapport à la position transport-distribution; dans ce second mode de réalisation, le tapis circule sur des galets dont les axes sont perpendiculaires au sens d'introduction du produit dans la benne et cedit tapis comporte au moins une lucarne dont la dimension est sensiblement supérieure à la section frontale de chargement; ladite lucarne est obtenue par un espacement, entre deux barrettes, sensiblement supérieur à la largeur interne de la benne; l'espacement entre les autres barrettes étant voisin de l'espacement entre les chaines du tapis.

Selon une disposition préférentielle de l'invention, les galets de guidage du tapis sont disposés de part et d'autre de la benne, dans des caissons latéraux interchangeables, situés dans le prolongement de ladite benne; l'un de ces caissons étant le caisson distributeur.

Selon une autre disposition de l'invention, le chemin suivi par le tapis est en forme de trapèze rectangle, la partie inclinée de ce chemin se situant dans le caisson latéral de distribution en forme de hotte.

Selon une autre disposition de l'invention, le tapis est entraîné par les galets supérieurs, au moyen d'un moteur hydraulique à deux sens de rotation.

Toujours selon l'invention, le caisson distributeur comporte d'une part, à sa partie inférieure une trappe réglable et d'autre part, latéralement, un volet réglable pour l'évacuation des produits.

L'invention sera mieux comprise à l'aide de la description suivante et des dessins annexés donnés à titre indicatif et dans lesquels:

- la figure 1 est une perspective de la désileuse selon un premier mode de réalisation de l'invention,
- la figure 2 est une vue de côté en coupe selon 2–2, du premier mode de réalisation,
- la figure 3 est une vue frontale, en coupe selon 3–3, du premier mode de réalisation, sans le bras de manœuvre, ni la griffe,
- la figure 4 est une perspective d'une désileuse basculante selon un second mode de réalisation de l'invention, sans la griffe ni le bras de manœuvre,
- la figure 5 est une vue de côté, en coupe selon 5–5, du second mode de réalisation, en position normale de chargement de la benne,
- la figure 6 est une vue de côté, en coupe selon 5–5, du second mode de réalisation, en position normale de mélange ou de distribution,
- la figure 7 est une vue frontale, en coupe selon 7–7 du second mode de réalisation, sans le bras de manœuvre, ni la griffe.

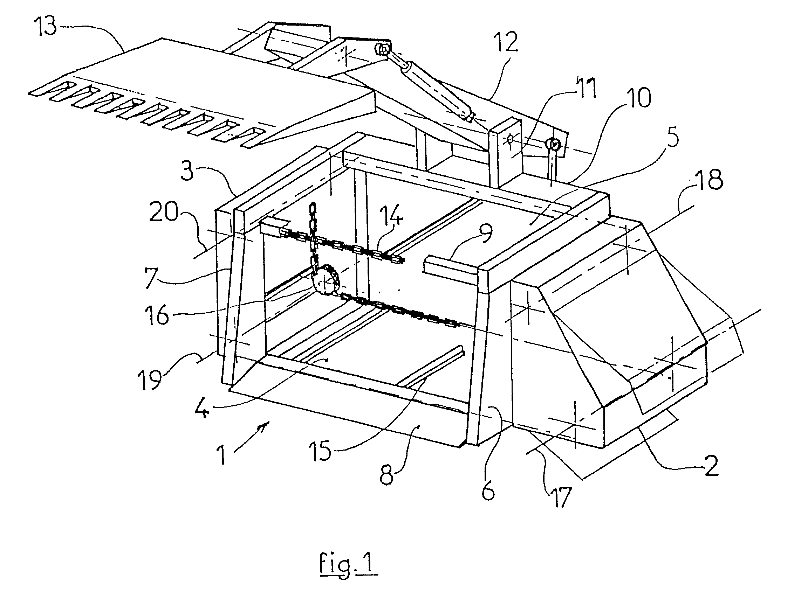

La désileuse, représentée fig. 1, est une désileuse du type portée, par un tracteur non représenté, elle est fixée sur le système d'attelage trois points, transversalement.

Cette désileuse comprend tout d'abord un caisson central 1, qui fait office de benne de chargement; ce caisson est ouvert latéralement sur deux caissons 2 et 3 dont le rôle est précisé plus loin; il est ouvert également à la partie supérieure et sur toute la partie frontale de chargement. Ce caisson est constitué d'un fond 4, d'une paroi verticale 5 adossée au tracteur, munie des points d'ancrage sur le tracteur, visibles fig. 2, et il comporte deux côtés 6 et 7 en forme de cadre sur lesquels sont fixés les caissons 2 et 3. La section frontale de chargement de la benne est délimitée par les montants des côtés 6 et 7, par la traverse basse 8 située devant le fond 4 et par la traverse haute 9 qui maintient l'écartement des côtés 6 et 7. La paroi verticale 5 du fond de la benne, se prolonge jusqu'à une poutre horizontale 10 solidaire des côtés 6 et 7 à leur partie supérieure. Cette poutre horizontale 10 supporte dans une chape 11, le bras 12 de manœuvre de la griffe 13 de chargement. Cette griffe 13 fait également office de porte pour obturer la section frontale de la benne, entre la traverse basse 8 et les deux montants des côtés 6 et 7. Le bras 12 et la griffe 13 sont actionnés de façon classique par des vérins hydrauliques, à partir du tracteur. Pour obtenir un bon chargement de la benne, il est nécessaire de faire pénétrer l'extrémité de la griffe 13 dans la benne afin qu'elle pousse les produits contre la paroi verticale 5.

Les produits chargés dans la benne sont disposés sur le brin inférieur d'un tapis mélangeur distributeur 14 sans fin qui circule autour de la benne. Ce tapis mélangeur distributeur 14 est constitué de deux chaines séparées par des barrettes 15 régulièrement espacées. L'espacement entre les barrettes est voisin de l'écartement des chaines; il peut être réduit ou augmenté selon les produits à distribuer.

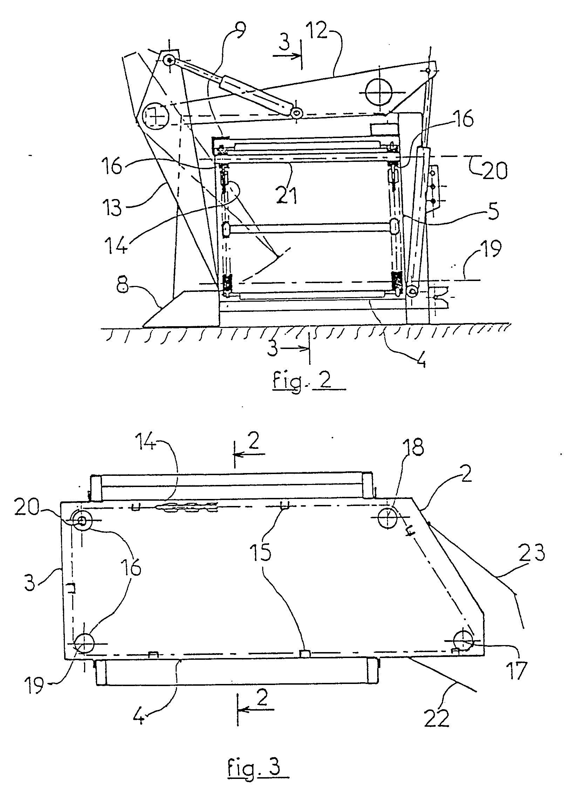

Les moyens de guidage du tapis 14 sont des galets 16 disposés à l'extérieur du caisson 1 formant la benne, fig. 3.

Ces moyens de guidage sont positionnés dans les caissons latéraux 2 et 3 qui prolongent la benne. Le caisson 2 est un caisson distributeur en forme de hotte, le caisson 3 est un caisson parallélépipédique. Ces deux caissons comportent des moyens de fixation identiques sur les côtés 6 et 7 de la benne pour pouvoir être facilement permutés et permettre ainsi une distribution des deux côtés. Le chemin suivi par le tapis 14 est en forme de trapèze rectangle; la partie inclinée de ce chemin se situant dans le caisson distributeur 2 entre les axes 17 et 18 situés respectivement en partie basse et en partie haute dudit caisson. La branche verticale du chemin est disposée dans le caisson 3 entre les axes 19 et 20 situés respectivement en partie basse et en partie haute dudit caisson 3.

Le tapis 14 est disposé, comme la désileuse, transversalement par rapport au tracteur; les axes 17 à 20 sont parallèles à l'axe médian du tracteur d'une part, et au sens d'introduction du produit dans la benne par la griffe 13, d'autre part.

L'entrainement du tapis 14 est effectué de préférence à la partie supérieure du caisson 3, directement par deux galets 16 solidaires d'un arbre 21 centré sur l'axe 20; cet arbre étant entrainé par un moteur hydraulique non représenté.

Les autres galets de guidage du tapis, centrés sur les axes 17, 18 et 19 sont montés en porte à faux à l'intérieur des caissons. Le brin inférieur du tapis 14 circule sur le fond 4 de la benne; il est protégé de la griffe 13 par la traverse basse d'entrée 8, fig. 2, qui relève le seuil d'entrée de la benne.

Le brin supérieur du tapis 14 peut être guidé par la traverse haute 9. Les galets 16 et le tapis étant situés en dehors de la section frontale de chargement, l'extrémité de la griffe 13 peut pénétrer dans la benne pour pousser les produits vers la paroi verticale 5.

Pendant le chargement de la benne au moyen de la griffe 13, le tapis 14 est immobile. Il est mis en mouvement pour mélanger les produits posés sur le brin inférieur lorsque la griffe est placée en position de porte sensiblement verticale; pour améliorer le mélange, le tapis 14 peut être entrainé dans les deux sens par son moteur hydraulique.

Pour le déchargement, le tapis 14 circule en allant de l'axe 19 à l'axe 17, et le caisson 2 de distribution est ouvert au moyen d'une trappe 22 disposée à la partie inférieure. Cette trappe 22 permet au produit poussé par les barrettes 15 du tapis 14 de glisser dans l'auge non représentée. Une autre ouverture du caisson 2, sous la forme du volet latéral 23 permet d'accroitre l'évacuation du produit. L'ouverture de la trappe 22 et celle du volet 23 sont réglables pour varier le débit de distribution selon les produits. Le débit peut être réglé également au cours de la distribution, par modification de la vitesse d'avancement du tapis.

L'inclinaison du tapis 14 dans le caisson 2 permet une meilleure homogénéisation des produits pendant le transport; elle permet aussi, pendant la distribution, une évacuation rapide des produits mélangés par poussée entre les barrettes du fait de la compression qui s'exerce sur les produits par la branche inclinée du tapis 14.

L'espacement des barrettes 15 du tapis doit être suffisant pour permettre le passage du produit entre deux barrettes consécutives; cet espacement est sensiblement du même ordre que l'espacement des chaines comme dit précédemment.

La désileuse selon l'invention est conçue de façon à pouvoir distribuer à droite ou à gauche selon le cas grâce à l'interchangeabilité des caissons 2 et 3; il est également possible de prévoir des caissons 2 et 3 identiques pour distribuer soit d'un côté, soit de l'autre, par l'inversion du sens le déplacement du tapis mélangeur 14.

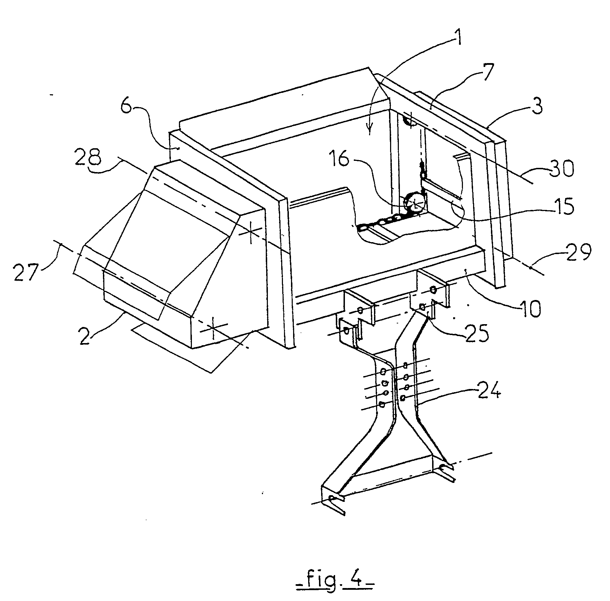

La figure 4 présente le second mode de réalisation de la désileuse qui est une désileuse mélangeuse et distributrice du type basculante.

Ce type de désileuse, comporte de nombreux éléments communs avec la désileuse précédente et dont les repères sont identiques. Le caisson central 1, qui forme la benne de chargement présente l'avantage d'offrir en position de mélange et/ou de distribution, comme représenté figure 1, une bonne étanchéité car l'ouverture de chargement se situe sur le dessus au lieu de rester frontale et d'être simplement obturée par la griffe 13 qui fait dans ce cas office de porte.

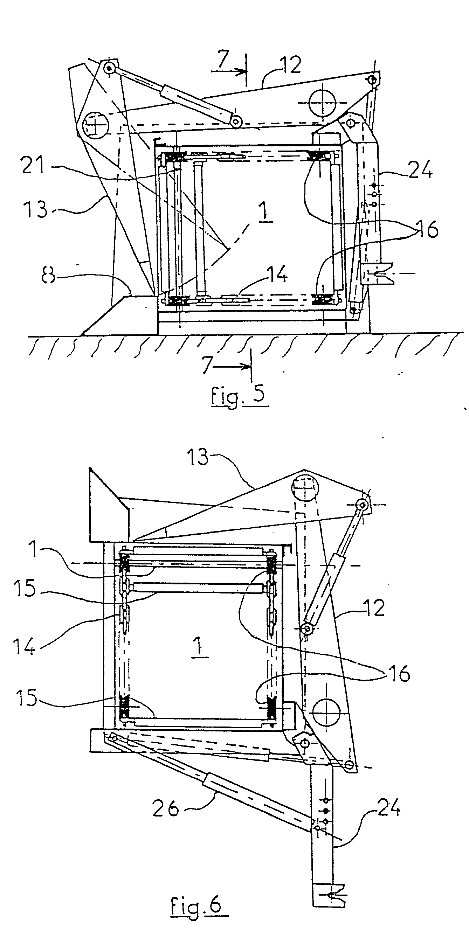

Cette désileuse basculante est solidaire du système d'attelage trois points du tracteur par l'intermédiaire d'un support 24 articulé au moyen de chapes 25, sur la poutre transversale 10 servant aussi d'ancrage au bras de manœuvre 12 de la griffe 13. Un vérin 26, visible figure 6, et disposé entre le support 24 et le bras de la benne, permet de la faire pivoter de la position normale de chargement (figure 5), à la position normale de mélange et de distribution (figures 4 et 6).

Dans sa position normale de chargement, représentée figure 5, les produits sont introduits dans le caisson central ou benne 1, au moyen de la griffe 13 qui est articulée sur un bras de manœuvre 12 et actionnée par vérin. Le bras de manœuvre 12 est articulé sur la benne et actionné également par vérin depuis le tracteur.

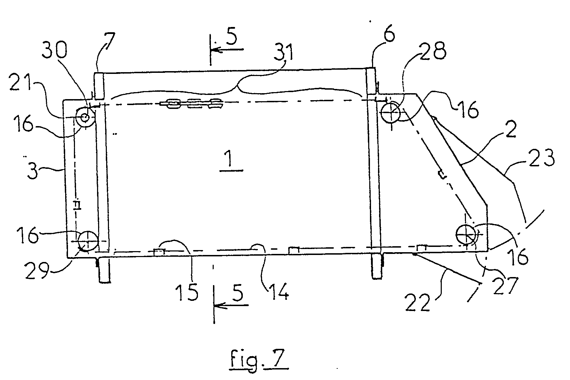

Dans la position représentée figure 6, la benne est remplie de produits servant à l'alimentation du bétail. La griffe peut être ouverte pour introduire d'autres produits comme des granulés. Le mélange des différents produits est rendu possible par la mise en mouvement du tapis mélangeur distributeur 14 disposé transversalement, et constitué de deux chaines entre lesquelles sont disposées des barrettes 15. Les produits sont bien maintenus dans la benne 1 qui est étanche, avec des parois fixes d'une part et, d'autre part, une trappe 22 et une paroi 23 fermées au niveau du caisson distributeur 2, figure 7, en forme de hotte.

Le tapis 14, figure 3, suit un chemin en forme de trapèze rectangle et dont la grande base se situe dans le fond de la benne et la petite base en haut, lorsqu'elle est en position normale de transport et de distribution, et dont les angles sont situés à l'extérieur du volume du caisson 1 formant benne. Le tapis 14 est guidé dans les caissons latéraux 2 et 3 qui prolongent la benne, au moyen de galets 16 disposés dans les angles du trapèze.

Le caisson 2 est le caisson distributeur en forme de hotte dans lequel se situe le pan incliné du trapèze rectangle; le caisson 3 est parallélépipédique et reçoit le pan vertical du trapèze.

Les galets 16 sont centrés sur des axes 27, 28, respectivement en parties basse et haute du caisson distributeur 2 et sur des axes 29, 30, respectivement en parties basse et haute du caisson parallélépipédique 3. Ces axes 27 à 30, parallèles entre eux, sont perpendiculaires au sens d'avancement du produit dans la benne 1 lorsqu'elle est en position de chargement, figure 5, et ils sont parallèles au sens d'avancement de la désileuse et du tracteur, dans la position de transport, mélange et distribution, figures 4 et 6.

Comme dans le cas de la désileuse de la figure 1, les galets 16 sont montés en porte à faux à l'intérieur des caissons; deux galets, disposés en partie haute du caisson 3, sont solidaires d'un arbre 21 qui assure l'entrainement du tapis au moyen d'un moteur hydraulique non représenté.

Le tapis 14 est également muni de barrettes 15 solidaires des chaines, mais il comporte une lucarne 31, figure 7, c'est-à-dire un espacement plus important entre deux barrettes consécutives, au moins égal à la largeur du caisson central 1 entre ses deux côtés 6 et 7; cette lucarne 31 permet de disposer le tapis 14 de façon à ne pas obturer l'orifice de chargement de la benne. La mise en place de cette lucarne 31 en face de l'orifice de chargement est effectuée par le conducteur du tracteur avant de faire basculer la désileuse de la position normale de transport et mélange-distribution, figure 6, à la position normale de chargement, figure 5. L'espacement entre les autres barrettes 15 du tapis correspond sensiblement à l'espacement entre les chaines dudit tapis.

Le tapis transporteur 14 ne fait pas obstacle aux produits poussés par la griffe 13, ni à la griffe elle-même qui peut pénétrer dans la benne; le brin de chaine inférieur du tapis 14, figure 5, est situé en-dessous du niveau d'entrée dans le caisson 1, du fait d'un décalage du seuil de la traverse d'entrée 14 avec la paroi 4 qui fait office de plancher dans la position normale de chargement.

Après basculement pour mettre la désileuse en position de transport-distribution, le mélange des produits disposés alors à l'intérieur du tapis 14 est effectué par brassage au moyen dudit tapis 14. Le déplacement du tapis peut s'effectuer dans les deux sens au moyen de l'entrainement par moteur hydraulique non représenté, comme dans le cas de la désileuse de la figure 1.

De même, le caisson 3 parallélépipédique supportant les galets 16 d'entrainement du tapis 14, comporte des moyens de fixation sur le caisson central 1, identiques à ceux du caisson distributeur 2; cette particularité permet une interchangeabilité des caissons 2 et 3, et ainsi une inversion du côté de distribution des produits.

Le caisson distributeur 2 comporte la même trappe 22 d'évacuation et de distribution disposée à sa partie inférieure et sur laquelle s'écoulent les produits poussés par les barrettes 15 du tapis en mouvement. Pour accentuer le déchargement, le caisson distributeur 2 comporte, latéralement le même volet 23 qui s'étend de la partie basse du caisson jusqu'au niveau des galets 16 en haut dudit caisson. La trappe 22 et le volet 23 sont réglables séparément pour permettre un choix de débits selon les produits à décharger.

Là aussi, le débit peut encore être modifié en faisant varier la vitesse d'avancement du tapis 14, et ce réglage est réalisable à volonté par le conducteur du tracteur.

On peut également prévoir, compte-tenu de la possibilité de déplacement du tapis 14 dans les deux sens, de disposer des caissons distributeurs 2 de chaque côté du caisson central 1.

**Revendications**

1. Désileuse mélangeuse et distributrice dont la benne (1) est chargée frontalement au moyen d'une griffe (13) montée sur un bras de manœuvre (12), comportant des moyens en forme de tapis pour mélanger et distribuer le produit, caractérisée en ce que ces moyens sont constitués d'un tapis unique (14) de mélange et de distribution, du type à chaîne sans fin munie de barrettes (15), lequel tapis (14) est disposé transversalement par rapport au sens d'avancement de la machine, et est guidé par des galets (16) disposés en partie basse et en partie haute de la benne (1) à l'extérieur de la section frontale de chargement de ladite benne (1), pour permettre l'introduction de la griffe (13) et des produits à l'intérieur et vers le fond de ladite benne.

2. Désileuse mélangeuse et distributrice selon la revendication 1, du type à chargement frontal, la griffe (13) faisant office de porte pour obturer la section frontale de chargement de la benne (1), caractérisée en ce que le tapis (14) est un tapis mélangeur distributeur constitué de deux chaînes séparées par des barrettes (15), lequel tapis circule sur des galets (16) dont les axes (17 à 20) sont parallèles par rapport au sens d'introduction des produits dans la benne (1) ainsi que par rapport au sens d'avancement de la désileuse.

3. Désileuse mélangeuse et distributrice selon la revendication 2, caractérisée en ce que l'espacement entre les barrettes (15) du tapis (14) est voisin de l'espacement entre les chaines dudit tapis.

4. Désileuse mélangeuse et distributrice selon l'une quelconque des revendications 2 ou 3, caractérisée en ce que la benne (1) comporte une traverse frontale (9) qui maintient l'écartement de ses côtés (6 et 7), à leur partie supérieure.

5. Désileuse mélangeuse et distributrice selon la revendication 4, caractérisée en ce que le tapis (14) est guidé par la traverse (9).

6. Désileuse mélangeuse et distributrice selon la revendication 1 du type basculante avec deux positions, une position normale de transport et de distribution et une position normale de chargement, obtenue par pivotement complet de la désileuse, de 90° par rapport à la position transport distribution, caractérisée en ce que le tapis est un tapis mélangeur distributeur qui circule sur des galets (16) dont les axes (27 à 30) sont perpendiculaires au sens d'introduction des produits dans la benne (1) en position de chargement et qui comportent au moins une lucarne (31) dont la dimension est sensiblement supérieure à la section frontale de chargement.

7. Désileuse mélangeuse et distributrice selon la revendication 6, caractérisée en ce que la lucarne (31) du tapis (14) est obtenue au moyen d'un espacement, entre deux barrettes (15) consécutives, sensiblement supérieur à la largeur interne de la benne (1), l'espacement entre les autres barrettes (15) étant voisin de l'espacement entre les chaines dudit tapis (14).

8. Désileuse mélangeuse et distributrice selon l'une quelconque des revendications 1 à 7, caractérisée en ce que les galets (16) de guidage du tapis (14) sont disposés de part et d'autre de la benne (1), dans des caissons (2 et 3) latéraux situés dans le prolongement de ladite benne (1), le caisson (2) étant le caisson distributeur.

9. Désileuse mélangeuse et distributrice selon l'une quelconque des revendications 1 à 8, caractérisée en ce que le chemin suivi par le tapis (14) est un chemin en forme de trapèze rectangle, la partie inclinée de ce chemin se situant dans le caisson latéral (2) de distribution en forme de hotte.

10. Désileuse mélangeuse et distributrice selon l'une des revendications 8 ou 9, caractérisée en ce que le tapis (14) est entrainé directement par les galets (16) solidaires d'un arbre (21) disposé à la partie supérieure du caisson parallélépipédique (3), au moyen d'un moteur hydraulique.

11. Désileuse mélangeuse et distributrice selon la revendication 10, caractérisée en ce que les galets (16) disposés en partie basse du caisson et dans le caisson distributeur (2) sont montés en porte à faux sur des arbres solidaires desdits caissons.

12. Désileuse mélangeuse et distributrice selon l'une quelconque des revendications 8 à 11, caractérisée en ce que le caisson distributeur (2) comporte, à sa partie inférieure, une trappe (22) réglable pour l'évacuation des produits déplacés par le tapis (14).

13. Désileuse mélangeuse et distributrice selon l'une quelconque des revendications 8 à 12, caractérisée en ce que le caisson distributeur (2) comporte un volet latéral (23) réglable pour l'évacuation des produits.

14. Désileuse mélangeuse et distributrice selon l'une quelconque des revendications 8 à 13, caractérisée en ce que les caissons (2 et 3) comportent des moyens de fixation identiques sur les côtés (6 et 7) de la benne (1) pour pouvoir être permutés et distribuer les produits d'un côté ou de l'autre, de la benne.

15. Désileuse mélangeuse et distributrice selon l'une quelconque des revendications 1, 2 ou 6, caractérisée en ce que le tapis (14) comporte deux sens de déplacement.

16. Désileuse mélangeuse et distributrice selon la revendication 15, caractérisée en ce qu'elle comporte deux caissons distributeurs (2) disposés de part et d'autre de la benne (1).

**Claims**

1. Silage unloader, mixer and distributor the skip (1) of which is loaded at the front by means of a claw (13) mounted on an actuating arm (12) and which has means in conveyor form for mixing and distributing the product, characterized in that these means consist of a single mixing and distributing conveyor (14) of the type with an endless chain equipped with bars (15), the said conveyor (14) being arranged transversely relative to the direction of advance of the machine and being guided by rollers (16) located in the lower part and in the upper part of the skip (1) on the outside of the front loading section of the said skip (1), to allow the claw (13) and the products to be introduced inside and towards the bottom of the said skip.

2. Silage unloader, mixer and distributor according to Claim 1, of the front-loading type, the claw (13) functioning as a door for closing off the front loading section of the skip (1), characterized in that the conveyor (14) is a mixing and distributing conveyor consisting of two chains separated by bars (15), the said conveyor travelling over rollers (16), of which the axes (17 to 20) are parallel in relation to the direction of introduction of the products into the skip (1) and in relation to the direction of advance of the silage unloader.

3. Silage unloader, mixer and distributor according to Claim 2, characterized in that the spacing between the bars (15) of the conveyor (14) is approximate to the spacing between the chains of the said conveyor.

4. Silage unloader, mixer and distributor according to either one of Claims 2 or 3, characterized in that the skip (1) comprises a front crossmember (9) which maintains the distance between its sides (6 and 7) in their upper part.

5. Silage unloader, mixer and distributor according to Claim 4, characterized in that the conveyor (14) is guided by the crossmember (9).

6. Silage unloader, mixer and distributor according to Claim 1, of the tilting type with two positions, namely a normal transport and distribution position and a normal loading position obtained as a result of the complete pivoting of the silage unloader through 90° in relation to the transport and distribution position, characterized in that the conveyor is a mixing and distributing conveyor travelling over rollers (16), of which the axes (27 to 30) are perpendicular to the direction of introduction of the products into the skip (1), in the loading position, and which has at least one opening (31) the size of which is substantially larger than the front loading section.

7. Silage unloader, mixer and distributor according to Claim 6, characterized in that the opening (31) in the conveyor (14) is obtained by means of a spacing between two consecutive bars (15) which is substantially larger than the inner width of the skip (1), the spacing between the other bars (15) being approximate to the spacing between the chains of the said conveyor (14).

8. Silage unloader, mixer and distributor according to any one of Claims 1 to 7, characterized in that the guide rollers (16) of the conveyor (14) are arranged on either side of the skip (1) in lateral boxes (2 and 3) located in the extension of the said skip (1), the box (2) being the distributor box.

9. Silage unloader, mixer and distributor according to any one of Claims 1 to 8, characterized in that the path followed by the conveyor (14) is a path in the form of a rectangular trapezium, the inclined part of this path being located in the hood-shaped lateral distribution box (2).

10. Silage unloader, mixer and distributor according to one of Claims 8 or 9, characterized in that the conveyor (14) is driven directly by the rollers (16), which are fixed to a shaft (21) located in the upper part of the parallelepipedic box (3), by means of an hydraulic motor.

11. Silage unloader, mixer and distributor according to Claim 10, characterized in that the rollers (16) arranged in the lower part of the box and in the distributor box (2) are mounted in an overhanging manner on shafts fixed to the said boxes.

12. Silage unloader, mixer and distributor according to any one of Claims 8 to 11, characterized in that the distributor box (2), in its lower part, comprises an adjustable trap (22) for the discharge of the products moved along by the conveyor (14).

13. Silage unloader, mixer and distributor according to any one of Claims 8 to 12, characterized in that the distribution box (2) possesses an adjustable lateral flap (23) for the discharge of the products.

14. Silage unloader, mixer and distributor according to any one of Claims 8 to 13, characterized in that the boxes (2 and 3) comprise identical fastening means on the sides (6 and 7) of the skip (1), so that it is possible to interchange them and distribute the products from one side of the skip or the other.

15. Silage unloader, mixer and distributor according to any one of Claims 1, 2 or 6, characterized in that the conveyor (14) has two directions of movement.

16. Silage unloader, mixer and distributor according to Claim 15, characterized in that it possesses two distributor boxes (2) arranged on either side of the skip (1).

**Patentansprüche**

1. Vorrichtung zur Entnahme, zum Mischen und Verteilen, deren Gehäuse (1) von vorn mittels eines an einem Betätigungsarm (12) angebrachten Greifers (13) beschickt wird, und die eine Einrichtung in Form eines Transportbandes zum Mischen und Verteilen des Gutes aufweist, dadurch gekennzeichnet, daß die Einrichtung aus einem einzigen Misch- und Verteiler-Band (14) in Form einer mit Stegen (15) versehenen endlosen Kette besteht, und das Band (14) quer zur Vorschubrichtung der Vorrichtung verläuft sowie durch Rollen (16) geführt ist, die an der Unterseite und an der Oberseite des Gehäuses (1) außerhalb von dessen vorderen Beschickungsquerschnitts angeordnet sind, um das Eingreifen des Greifers (13) und des Gutes in das Innere und gegen die Rückwand des Gehäuses zu gestatten.

2. Vorrichtung nach Anspruch 1 mit frontaler Beschickung, wobei der Greifer (13) zum Verschließen der frontalen Beschickungsöffnung des Gehäuses (1) dient, dadurch gekennzeichnet, daß das Förderband (14) als Misch- und Verteilereinrichtung ausgebildet ist und aus zwei durch Stege (15) getrennten Ketten besteht und über Rollen (16) umläuft, deren Achsen (17, 18, 19, 20) parallel zur Beschickungsrichtung des Gehäuses (1) und zur Vorschubrichtung der Vorrichtung verlaufen.

3. Vorrichtung nach Anspruch 2, dadurch gekennzeichnet, daß der Abstand zwischen den Stegen (15) des Förderbandes (14) dem Abstand zwischen dessen beiden Ketten entspricht.

4. Vorrichtung nach einem der Ansprüche 2 und 3, dadurch gekennzeichnet, daß das Gehäuse (1) eine vordere Quertraverse (9) aufweist, die im oberen Bereich der Seiten (6 u. 7) als Abstandhalter dient.

5. Vorrichtung nach Anspruch 4, dadurch gekennzeichnet, daß das Förderband (14) in der Traverse (9) geführt ist.

6. Vorrichtung nach Anspruch 1, die in eine normale Transport- und Verteilerposition und eine normale Beschickungsposition kippbar ist durch Schwenken um 90° der Vorrichtung gegenüber der Transport- und Verteilerstellung, dadurch gekennzeichnet, daß das Band (14) ein Misch- und Verteilerband ist, welches über Rollen (16) umläuft, deren Achsen (27, 28, 29, 30) senkrecht zur Beschickungsrichtung des Gutes in das Gehäuse (1) verlaufen und mindestens eine Luke (31) aufweist, deren Abmessungen etwas größer ist als die frontale Beschickungsöffnung.

7. Vorrichtung nach Anspruch 6, dadurch gekennzeichnet, daß die Luke (31) des Bandes (14) durch einen Abstand zwischen zwei aufeinanderfolgenden Stegen (15) gebildet ist, der etwas größer ist als die innere Breite des Gehäuses (1) und der Abstand zwischen den anderen Stegen (15) etwa dem Abstand zwischen den Ketten des Förderbandes (14) entspricht.

8. Vorrichtung nach einem der Ansprüche 1 bis 7, dadurch gekennzeichnet, daß die Führungsrollen (16) des Förderbandes (14) an beiden Seiten des Gehäuses (1) in den Hauben (2 u. 3) gelagert sind, die seitlich in Verlängerung des Gehäuses (1) angeordnet sind und von denen eine (2) als Verteiler dient.

9. Vorrichtung nach einem der Ansprüche 1 bis 8, dadurch gekennzeichnet, daß die Bewegungsbahn des Förderbandes (14) einem rechtwinkligen Trapez entspricht, wobei der geneigte Teil dieser Bewegungsbahn innerhalb der seitlichen korbförmigen Verteilerhaube (2) angeordnet ist.

10. Vorrichtung nach Anspruch 8 oder 9, dadurch gekennzeichnet, daß das Förderband (14) mittels eines hydraulischen Motors über die fest mit einer Welle (21) verbundenen Rollen (16) angetrieben ist, welche im oberen Bereich der parallelepipedischen Haube (3) angeordnet ist.

11. Vorrichtung nach Anspruch 10, dadurch gekennzeichnet, daß die im unteren Bereich der Haube (3) und in der Verteilerhaube (2) angeordneten Rollen (16) auf fest mit den Hauben (2, 3) verbundenen Wellen überhängend angeordnet sind.

12. Vorrichtung nach einem der Ansprüche 8 bis 11, dadurch gekennzeichnet, daß die Verteilerhaube (2) in ihrem unteren Bereich eine regelbare Klappe (22) zum Austrag des von dem Förderband (14) bewegten Gutes aufweist.

13. Vorrichtung nach einem der Ansprüche 8 bis 12, dadurch gekennzeichnet, daß die Verteilerhaube (2) eine zum Austrag des Gutes dienende seitliche regelbare Verschlußklappe (23) aufweist.

14. Vorrichtung nach einem der Ansprüche 8 bis 13, dadurch gekennzeichnet, daß die Hauben (2, 3) zu ihrer Befestigung an den Seiten (6 u. 7) des Gehäuses (1) dienende identische Befestigungsmittel aufweisen, die einen Austausch der Hauben (2, 3) und eine Verteilung des Gutes nach einer beliebigen Gehäuseseite gestatten.

15. Vorrichtung nach einem der Ansprüche 1, 2 oder 6, dadurch gekennzeichnet, daß das Band (14) eine umkehrbare Bewegungsrichtung aufweist.

16. Vorrichtung nach Anspruch 15, dadurch gekennzeichnet, daß zwei Verteilerhauben (2), je eine an jeder Seite des Gehäuses (1), vorgesehen sind.

Fig.1

fig. 2

fig. 3

11

_fig. 4_

fig. 5

fig.6

15

fig. 7